# EUROPEAN PATENT SPECIFICATION

(11) **EP 2 773 491 B1**
(45) Date of publication and mention of the grant of the patent: **23.12.2020**
(21) Application number: 12755921.9
(22) Date of filing: 13.08.2012
(51) Int. Cl.: B25D 17/00, B25F 5/00, G01D 11/10

(54) **ELECTRIC POWER TOOL**
ELEKTRISCH ANGETRIEBENES WERKZEUG
OUTIL ÉLECTRIQUE

(30) Priority: 31.10.2011 JP 2011238554
(43) Date of publication of application: 10.09.2014
(73) Proprietor: Koki Holdings Co., Ltd., Tokyo 108-6020 (JP)
(72) Inventor: ABE, Satoshi, Hitachinaka-shi Ibaraki 312-8502 (JP); OOKUBO, Takahiro, Hitachinaka-shi Ibaraki 312-8502 (JP); IWATA, Kazutaka, Hitachinaka-shi Ibaraki 312-8502 (JP)
(74) Representative: Popp, Eugen
(86) International application number: PCT/JP2012/005142
(87) International publication number: WO 2013/065217

(56) References cited:
- EP-A1- 2 286 962
- WO-A1-2011/129732
- DE-A1- 10 303 005
- US-A1- 2010 164 026
- US-A1- 2010 242 605

## Description

### Technical Field

This invention relates to an electric power tool, and, more particularly, the invention relates to an electric power tool for drilling a member to be drilled by a tip tool.

### Background Art

An electric power tool, that is, electric power operating machine for drilling a member to be drilled by a tip tool includes a hammer drill, a rotary hammer drill, and others for drilling the member to be drilled by rotating a drill bit which serves as the tip tool and applying a striking force to the drill bit. As the electric power tool, a type thereof provided with a distance sensor for measuring a drilling depth is cited as described in, for example, Patent Literature 1. WO 2011/129732 A1 discloses an electric power tool according to the preamble of claim 1.

### Citation List

### Patent Literature

PTL 1: Japanese Patent Application Laid-Open Publication No. 2011-131366

### Summary of Invention

### Technical Problem

However, when a high-sensitive distance sensor is attached to a housing of the electric power tool, there is a risk that the sensor is damaged due to oscillation generated in a drilling operation of the electric power tool so that the drilling depth cannot be continuously detected.

A preferred aim of the present invention is to provide an electric power tool capable of continuous detection of a sensor by preventing damage of the sensor due to oscillation generated in an operation.

### Solution to Problem

The electric power tool according to the present invention includes the features of independent claim 1.

Preferable embodiments are defined in the dependent claims 2 to 5.

### Advantageous Effects of Invention

According to the present invention, it is possible to provide an electric power tool capable of continuous detection of a sensor by preventing damage of the sensor due to oscillation generated in an operation.

### Brief Description of Drawings

[fig.1]Fig. 1 is a cross-sectional view of a drilling tool according to an embodiment of the present invention.
[fig.2]Fig. 2 is an enlarged cross-sectional view in vicinity of a sensor unit of the drilling tool of Fig. 1.
[fig.3]Fig. 3 is a cross-sectional view taken along line III-III of Fig. 2.
[fig.4]Fig. 4 is an enlarged cross-sectional view illustrating a modified example of the sensor unit.

### Description of Embodiments

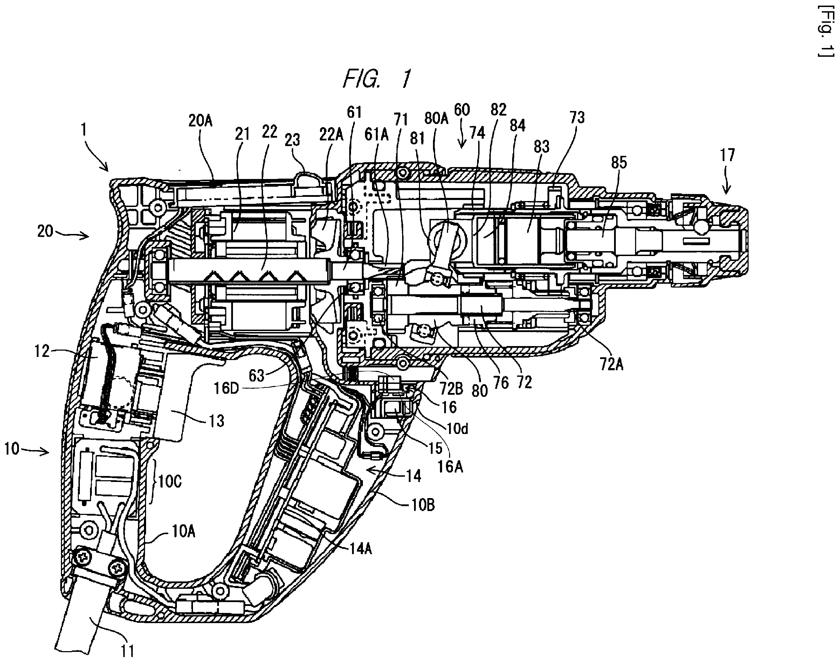

Hereinafter, an embodiment of the present invention will be explained in detail with reference to drawings. A drilling tool 1 as illustrated in Fig. 1 which is one example of the electric power tool is a rotary hammer drill for drilling a member to be drilled which is not illustrated, and a housing is configured of: a handle portion 10; a motor housing 20; and a gear housing 60. In the following explanations, a front/rear direction is defined so that a tip end side of a tool holding portion, that is, the attaching portion 17 illustrated on a right-hand side in Fig. 1 is a front end side of the drilling tool 1, and an upper/lower direction is defined so that a direction which is orthogonal to the front/ rear direction and in which the handle portion 10 extends from the motor housing 20 is a lower side.

The handle portion 10 is formed by integrally-molded plastic in a substantially U-shape. A motor housing portion 20A in which a motor 21 to be described later is housed is provided to an upper portion of the handle portion 10, and the motor housing portion 20A forms a part of the motor housing 20. A power cable 11 is mounted on a lower portion of a rear portion 10A of the handle portion 10, and a switch mechanism 12 connected to the motor 21 to be described later or others is embedded inside the handle portion 10. A trigger 13 which can be operated by an operator is physically connected to the switch mechanism 12. By operating the trigger 13, power supply and power stop to an inverter circuit which is not illustrated can be switched. A part of the rear portion 10A of the handle portion 10, which is just below the trigger 13, forms a grip portion 10C gripped by a middle (second) finger and a third finger when a user of the drilling tool 1 grips the rear portion 10A.

A control portion 14 including a main substrate 14A is arranged in a front portion 10B of the handle portion 10. The main substrate 14A is arranged along inclination of the front portion 10B. An opening portion 10d is formed above the front portion 10B of the handle portion 10. An LED 15 is arranged above the front portion 10B in order to irradiate light from this opening portion 10d onto the member to be drilled which is not illustrated. A sensor unit 16 is arranged above the LED 15.

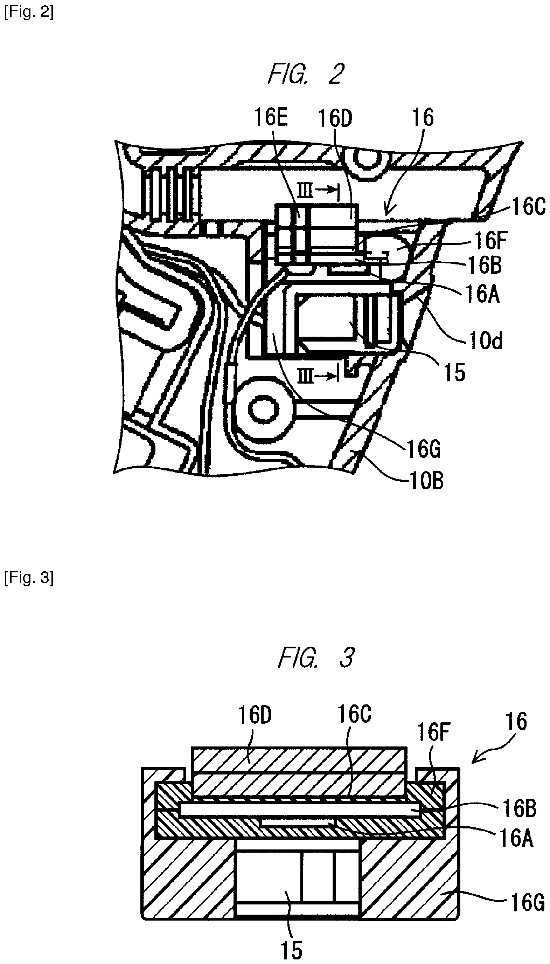

As illustrated in Figs. 2 and 3, the sensor unit 16 includes: an inclination sensor 16A; an electronic substrate 16B; an insulating sheet 16C; a weight 16D; a screw 16E; a first elastic member 16F; and a second elastic member 16G.

The inclination sensor 16A is a three-axis, that is, three-dimensional acceleration sensor of a high-sensitive capacitance detecting type which can measure acceleration of gravity up to 2G. A tip tool attached to the attaching portion 17 but not illustrated, that is, a drill bit is touched on ground, and positioning is made such that a vertically-directed, that is, perpendicularly-directed state of the drilling tool 1 to the ground is set as 0 degree, so that inclination of the drilling tool 1 with respect to this perpendicular position is detected by the acceleration sensor. This perpendicular position is set at the time of factory shipment. The electronic substrate 16B supports the inclination sensor 16A on a lower side thereof, and converts the inclination detected by the inclination sensor 16A into an electric signal to send the signal to the control portion 14. The insulating sheet 16C is arranged on the electronic substrate 16B, and the weight 16D is arranged thereon. The weight 16D is made of a double-layered high-specific-gravity metal plate. In the present embodiment, the weight 16D has a weight of about 10 times a weight of the electronic substrate 16B. Also, the weight 16D is arranged so that it is not in contact with other member than a member configuring the sensor unit 16.

The insulating sheet 16C is made of, for example, an insulating material such as resin or paper, and prevents conduction between the electronic substrate 16B and the weight 16D which is made of metal. The insulating sheet 16C and the weight 16D are mounted on the electronic substrate 16B by the screw 16E. The first elastic member 16F holds and covers the inclination sensor 16A and the electronic substrate 16B so that a portion on which the weight 16D of the electronic substrate 16B is mounted and a peripheral portion thereof remain. The second elastic member 16G is fixed at the front portion 10B of the handle portion 10, and holds the first elastic member 16F in an upper portion thereof and holds the LED 15 in a lower portion thereof. Therefore, the inclination sensor 16A, the electronic substrate 16B, and the weight 16D are supported by the front portion 10B of the handle portion 10 through the first elastic member 16F and the second elastic member 16G. The second elastic member 16G holds the LED 15 together with the part forming the opening portion 10d of the front portion 10B. The first elastic member 16F is made of sponge while the second elastic member 16G is made of rubber, and the first elastic member 16F is made of a material softer than that of the second elastic member 16G.

An LED 23 for displaying an angle detected by the inclination sensor 16A is provided in an upper portion of the motor housing 20, and light of the LED 23 is irradiated to an outside from a transparent window portion provided in an upper portion of the motor housing 20. The motor 21 is housed inside the motor housing 20. The LED 23 is lighted blue when the angle of the drilling tool 1 is in vicinity of 0 degree, and it is lighted either green or red as further away from the vicinity of 0 degree.

The motor 21 as illustrated in Fig. 1 is configured of a three-phase direct current brushless motor, and rotation thereof is controlled by a microcomputer which is not illustrated. The motor 21 includes an output shaft 22 extending toward the front end side whose shaft direction is the front/rear direction, and the output shaft 22 outputs a rotary drive force. An axial fan 22A is provided at a base portion of the output shaft 22 so as to be rotatable coaxially and integrally with the output shaft 22.

The gear housing 60 is molded by resin, and is provided on a front end side of the motor housing 20. A first intermediate shaft 61 obtained as extending the output shaft 22 coaxially therewith is arranged inside the gear housing 60, and is supported by a bearing 63 so as to be rotatable. A rear end of the first intermediate shaft 61 is coupled to the output shaft 22. A fourth gear 61A is provided at a tip of the first intermediate shaft 61. Also, a second intermediate shaft 72 is supported in parallel to the output shaft 22 inside the gear housing 60 by a bearing 72B so as to be rotatable around a shaft center thereof.

A fifth gear 71 which meshes with the fourth gear 61A is coaxially fixed at a rear end portion of the second intermediate shaft 72. A gear portion 72A is formed on a front end side of the second intermediate shaft 72, and meshes with a sixth gear 73 to be described later. A cylinder 74 is provided in a position above the second intermediate shaft 72 inside the gear housing 60. The cylinder 74 extends in parallel to the second intermediate shaft 72, and is supported so as to be rotatable. The sixth gear 73 is fixed on an outer periphery of the cylinder 74, and the cylinder 74 can be rotated by the meshing with the above-described gear portion 72A around a shaft center thereof.

The attaching portion 17 is provided on a front end side of the cylinder 74, and a tip tool which is not illustrated is attached thereto so as to be detachable. A clutch 76 biased by a spring toward the rear end side is spline-engaged with an intermediate portion of the second intermediate shaft 72, and the clutch 76 can switch between a hammer drill mode and a drill mode with using a change lever provided in the gear housing 60 but not illustrated. On the motor 21 side of the clutch 76, a motion converting portion 80 for converting the rotary motion into the reciprocating motion is attached outside the second intermediate shaft 72 so as to be rotatable. An arm portion 80A of the motion converting portion 80 is provided so as to be reciprocatable in the front/rear direction of the drilling tool 1 by the rotation of the second intermediate shaft 72.

A piston 82 is provided inside the cylinder 74. The piston 82 is attached so as to be reciprocatable in a direction parallel to the second intermediate shaft 72 and can slide inside the cylinder 74. A striking element 83 is attached inside the piston 82, and an air chamber 84 is defined between the piston 82 and the striking element 83 inside the cylinder 74. An intermediate element 85 is supported inside the cylinder 74 so as to be slidable in a moving direction of the piston 82 at a position on the air chamber side opposite to the striking element 83. A tip tool which is not illustrated can be attached to the attaching portion 17 at a position on the striking element side opposite to the intermediate element 85. Therefore, the striking element 83 can strike the tip tool, which is not illustrated, through the intermediate element 85.

When the mode is switched to the hammer drill mode by the clutch 76, the second intermediate shaft 72 and the motion converting portion 80 are coupled to each other by the clutch 76. The motion converting portion 80 is connected to the piston 82 provided inside the cylinder 74 through a piston pin 81 so as to be moved in response thereto.

Next, an operation of the drilling tool 1 according to the present embodiment will be explained. First, the operator directs the tip tool, which is not illustrated, to be perpendicular to the member to be drilled which is not illustrated, and confirms that the LED 23 is lighted blue, and then, operates the trigger 13 to be turned ON. In this manner, a voltage is supplied to the motor 21. When the trigger 13 is turned ON, the control portion 14 turns OFF the inclination detection by the inclination sensor 16A and turns OFF the lighting of the LED 23.

And, by the rotary drive of the motor 21, the rotary output of the motor 21 is transmitted to the second intermediate shaft 72 through the first intermediate shaft 61, the fourth gear 61A, and the fifth gear 71. The rotation of the second intermediate shaft 72 is transmitted to the cylinder 74 by the meshing of the gear portion 72A with the sixth gear 73, so that a rotary force is transmitted to the drilling bit 2. When the clutch 76 is moved to the hammer drill mode, the clutch 76 is coupled with the motion converting portion 80, so that a rotary drive force of the second intermediate shaft 72 is transmitted to the motion converting portion 80. In the motion converting portion 80, the rotary drive force is converted into the reciprocating motion of the piston 82 through the piston pin 81. An air pressure inside the air chamber 84 which is defined between the striking element 83 and the piston 82 is repeatedly increased and decreased by the reciprocating motion of the piston 82, so that a striking force is applied to the striking element 83. The striking element 83 moves forward to hit against a rear end surface of the intermediate element 85, so that the striking force is transmitted to the tip tool, which is not illustrated, through the intermediate element 85. In this manner, in the hammer drill mode, the rotary force and the striking force are simultaneously applied to the tip tool which is not illustrated.

When the clutch 76 is in the drill mode, the clutch 76 disconnects between the second intermediate shaft 72 and the motion converting portion 80, so that only the rotary drive force of the second intermediate shaft 72 is transmitted to the cylinder 74 through the gear portion 72A and the sixth gear 73. Therefore, only the rotary force is applied to the tip tool which is not illustrated. After completion of the drilling, when the trigger 13 is turned OFF, the control portion 14 turns ON the inclination detection by the inclination sensor 16A and turns ON the lighting of the LED 23 for a next drilling operation.

And, the oscillation generated in the operation of the drilling tool 1 is transmitted to the sensor 16A and the electronic substrate 16B. However, a frequency of the oscillation transmitted to the electronic substrate 16B is reduced since the weight 16D is provided in the electronic substrate 16B. Accordingly, the acceleration of gravity acting on the inclination sensor 16A can be reduced, so that the damage of the inclination sensor 16A can be prevented. Therefore, the inclination of the drilling tool 1 can be continuously detected so as to correct the inclination, and therefore, a perpendicular hole can be drilled at all times.

The inclination sensor 16A and the electronic substrate 16B are held so as to be covered by the first elastic member 16F, and the inclination sensor 16A, the electronic substrate 16B, and the weight 16D are supported by the front portion 10B of the handle portion 10 through the first elastic member 16F and the second elastic member 16G. Therefore, the frequency of the oscillation transmitted to the electronic substrate 16B can be further reduced. Therefore, the damage of the inclination sensor 16A can be further prevented.

Since the weight 16D is mounted on the electronic substrate 16B by the screw 16E, the weight 16D can be exactly fixed on the electronic substrate 16B, so that separation of the weight 16D from the electronic substrate 16B can be prevented.

The weight 16D is supported by the front portion 10B through the electronic substrate 16B, the first elastic member 16F, and the second elastic member 16G so as to not to be into contact with other member than a member configuring the sensor unit 16. Therefore, the oscillation generated in the operation of the drilling tool 1 is not directly transmitted to the weight 16D, so that the acceleration of gravity acting on the inclination sensor 16A can be exactly reduced, and the damage of the inclination sensor 16A can be prevented.

Note that it is conceivable to provide the inclination sensor 16A in the main substrate 14A. However, such an idea has not been employed due to facts that the inclination sensor 16A is easily affected by noises generated by other electronic parts provided in the main substrate 14A because of high sensitivity and weak output, and that it is difficult to cover the main substrate 14A by an elastic body because of a large size, which results in difficulty in a horizontal state even if the inclination sensor 16A is provided in the main substrate 14A which is inclined.

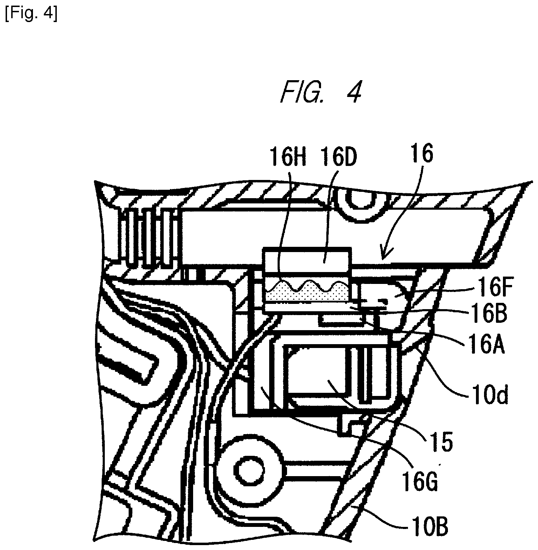

The present invention is not limited to the above-described embodiment, and various modifications and alternations are applicable. For example, although the weight 16D is mounted on the electronic substrate 16B by the screw 16E in the above-described embodiment, the present invention is not limited to this as long as the weight 16D can be exactly mounted on the electronic substrate 16B. More specifically, as illustrated in Fig. 4, the weight 16D may be mounted on the electronic substrate 16B by an adhesive 16H instead of the screw 16E. The weight 16D can be also exactly fixed on the electronic substrate 16B by the adhesive 16H, so that the separation of the weight 16D from the electronic substrate 16B can be prevented. Also, by such a configuration, the frequency of the oscillation transmitted to the electronic substrate 16B can be reduced, and the acceleration of gravity acting on the inclination sensor 16A can be reduced, so that the damage of the inclination sensor 16A can be prevented.

In the above-described embodiment, the inclination sensor 16A is the three-axis acceleration sensor of the capacitance detecting type. However, it may be a three-axis acceleration sensor of piezoresistance type or thermal detecting type. Also, in the above-described embodiment, the sensor is the inclination sensor 16A. However, it may be a distance sensor.

### Industrial Applicability

The present invention is applied to an electric power tool such as a hammer drill and a rotary hammer drill for drilling a member to be drilled by a tip tool.

## Claims

1. An electric power tool (1) comprising:
a motor (21);
an attaching portion (17) to which a tip tool is attached;
a striking element (83) driven by rotary drive of the motor (21) so as to apply a striking force to the tip tool;
a housing (10, 20, 60) for holding the attaching portion;
a sensor (16A) arranged inside the housing (10, 20, 60);
**characterised in that** the electric power tool further comprises:
an electronic substrate (16B) supported by the housing (10, 20, 60) and supporting the sensor (16A), which converts a result of detection of the sensor (16A) into an electric signal; and
a weight (16D) provided in the electronic substrate (16B); and
an elastic member (16F, 16G) for holding the electronic substrate (16B), and **in that**
the electronic substrate (16B), the sensor (16A), and the weight (16D) are supported by the housing (10, 20, 60) through the elastic member (16F, 16G) and
the elastic member (16F, 16G) supports the electronic substrate (16B) and the sensor (16A) so as to hold and cover them in a direction of applying the striking force to the tip tool.

2. The electric power tool (1) according to claim 1, **characterized in that** the weight (16D) is mounted on the electronic substrate (16B) by an adhesive.

3. The electric power tool (1) according to any one of claims 1 to 2,
**characterized in that**
an insulating material (16C) is interposed between the electronic substrate (16B) and the weight (16D), and the weight (16D) is made of metal.

4. The electric power tool according to any one of claims 1 to 3, further comprising: a main substrate (14A) electrically connected to the electronic substrate (16B), for receiving an electric signal from the electronic substrate (16B), and controlling actuation of the motor (21).

5. The electric power tool (1) according to any one of claims 1 to 4, **characterized in that** the elastic member (16F, 16G) includes a first elastic member (16F) and a second elastic member (16G), the first elastic member (16F) is provided to the sensor (16A) and the electronic substrate (16B), and the second elastic member (16G) supports the first elastic member (16F) and is fixed to the housing (10, 20, 60), and the first elastic member (16F) is made from a material softer than that of the second elastic material (16G).

## Patentansprüche

1. Elektrowerkzeug (1), aufweisend:
einen Motor (21);
einen Befestigungsabschnitt (17), an dem ein Spitzenwerkzeug angebracht wird;
ein Schlagelement (83), das von einem Drehantrieb des Motors (21) angetrieben wird, um eine Schlagkraft auf das Spitzenwerkzeug auszuüben,
ein Gehäuse (10, 20, 60) zum Halten des Befestigungsabschnitts;
einen im Gehäuse (10, 20, 60) angeordneten Sensor (16A);
**dadurch gekennzeichnet, dass** das Elektrowerkzeug ferner aufweist:
ein elektronisches Substrat (16B), das vom Gehäuse (10, 20, 60) getragen wird und den Sensor (16A) trägt, das ein Ergebnis der Erfassung des Sensors (16A) in ein elektrisches Signal umwandelt; und
ein Gewicht (16D), das in dem elektronischen Substrat (16B) vorgesehen ist; und
ein elastisches Element (16F, 16G) zum Halten des elektronischen Substrats (16B), und dass
das elektronische Substrat (16B), der Sensor (16A) und das Gewicht (16D) durch das Gehäuse (10, 20, 60) über das elastische Element (16F, 16G) getragen werden und
das elastische Element (16F, 16G) das elektronische Substrat (16B) und den Sensor (16A) trägt, um sie in einer Richtung der Anwendung der Schlagkraft auf das Spitzenwerkzeug zu halten und zu bedecken.

2. Elektrowerkzeug (1) nach Anspruch 1, **dadurch gekennzeichnet, dass** das Gewicht (16D) durch einen Klebstoff auf dem elektronischen Substrat (16B) montiert ist.

3. Elektrowerkzeug (1) nach irgendeinem der Ansprüche 1 bis 2, **dadurch gekennzeichnet, dass** ein Isoliermaterial (16C) zwischen dem elektronischen Substrat (16B) und dem Gewicht (16D) angeordnet ist und das Gewicht (16D) aus Metall ist.

4. Elektrowerkzeug (1) nach irgendeinem der Ansprüche 1 bis 3, ferner aufweisend:
ein Hauptsubstrat (14A), das mit dem elektronischen Substrat (16B) elektrisch verbunden ist, zum Erhalt eines elektrischen Signals von dem elektronischen Substrat (16B) und zur Steuerung der Betätigung des Motors (21).

5. Elektrowerkzeug (1) nach irgendeinem der Ansprüche 1 bis 4,
**dadurch gekennzeichnet, dass** das elastische Element (16F, 16G) ein erstes elastisches Element (16F) und ein zweites elastisches Element (16G) beinhaltet, das erste elastische Element (16F) dem Sensor (16A) und dem elektronischen Substrat (16B) bereitgestellt wird, und das zweite elastische Element (16G) das erste elastische Element (16F) trägt und an dem Gehäuse (10, 20, 60) befestigt ist, und das erste elastische Element (16F) aus einem Material ist, das weicher ist als das des zweiten elastischen Materials (16G).

## Revendications

1. Outil électrique (1) comprenant :
un moteur (21) ;
une portion d'attache (17) à laquelle un outil d'embout est attaché ;
un élément de percussion (83) entraîné par un entraînement rotatif du moteur (21) de manière à appliquer une force de percussion à l'outil d'embout ;
un boîtier (10, 20, 60) pour maintenir la portion d'attache ;
un capteur (16A) agencé à l'intérieur du boîtier (10, 20, 60) ;
**caractérisé en ce que** l'outil électrique comprend en outre :
un substrat électronique (16B) supporté par le boîtier (10, 20, 60) et supportant le capteur (16A), qui convertit un résultat de détection du capteur (16A) en un signal électrique ; et
un poids (16D) prévu dans le substrat électronique (16B) ; et
un élément élastique (16F, 16G) pour maintenir le substrat électronique (16B), et **en ce que**
le substrat électronique (16B), le capteur (16A) et le poids (16D) sont supportés par le boîtier (10, 20, 60) par le biais de l'élément élastique (16F, 16G) et
l'élément élastique (16F, 16G) supporte le substrat électronique (16B) et le capteur (16A) de manière à les maintenir et à les couvrir dans une direction d'application de la force de percussion à l'outil d'embout.

2. Outil électrique (1) selon la revendication 1, **caractérisé en ce que** le poids (16D) est monté sur le substrat électronique (16B) au moyen d'un adhésif.

3. Outil électrique (1) selon l'une quelconque des revendications 1 à 2,
**caractérisé en ce que**
un matériau isolant (16C) est interposé entre le substrat électronique (16B) et le poids (16D), et le poids (16D) est réalisé en métal.

4. Outil électrique (1) selon l'une quelconque des revendications 1 à 3, comprenant en outre :
un substrat principal (14A) électriquement connecté au substrat électronique (16B), destiné à recevoir un signal électrique depuis le substrat électronique (16B) et à commander l'actionnement du moteur (21).

5. Outil électrique (1) selon l'une quelconque des revendications 1 à 4,
**caractérisé en ce que** l'élément élastique (16F, 16G) inclut un premier élément élastique (16F) et un second élément élastique (16G), le premier élément élastique (16F) est prévu sur le capteur (16A) et le substrat électronique (16B), et le second élément élastique (16G) supporte le premier élément élastique (16F) et est fixé au boîtier (10, 20, 60), et le premier élément élastique (16F) est réalisé à partir d'un matériau plus souple que celui du second élément élastique (16G).
